Europäisches Patentamt

European Patent Office

Office européen des brevets

(11) Veröffentlichungsnummer: **0 188 765 B1**

## EUROPÄISCHE PATENTSCHRIFT

(45) Veröffentlichungstag der Patentschrift: **22.05.91**

(21) Anmeldenummer: **85116195.0**

(22) Anmeldetag: **18.12.85**

(51) Int. Cl.⁵: **C01G 49/02**, C09C 1/24, G11B 5/706

(54) Verfahren zur Herstellung von isometrischen magnetischen Eisenoxidpigmenten.

(30) Priorität: **09.01.85 DE 3500471**

(43) Veröffentlichungstag der Anmeldung:
**30.07.86 Patentblatt 86/31**

(45) Bekanntmachung des Hinweises auf die
Patenterteilung:
**22.05.91 Patentblatt 91/21**

(84) Benannte Vertragsstaaten:
**BE DE FR GB IT NL**

(56) Entgegenhaltungen:
EP-A- 0 014 363        DE-A- 2 508 155
DE-A- 2 612 798        DE-A- 2 617 569
DE-A- 3 004 718        DE-A- 3 248 533
DE-C- 891 625          DE-C- 944 427
DE-C- 1 112 725        US-A- 2 941 901
US-A- 3 822 210

(73) Patentinhaber: **BAYER AG**

**W-5090 Leverkusen 1 Bayerwerk(DE)**

(72) Erfinder: **Wiese, Jürgen, Dr.**
**Husarenallee 1**
**W-4150 Krefeld(DE)**
Erfinder: **Buxbaum, Gunter, Dr.**
**Holzapfelweg 2**
**W-4150 Krefeld(DE)**
Erfinder: **Burow, Wilfried, Dr.**
**Sollbrüggenstrasse 33**
**W-4150 Krefeld(DE).**

## Beschreibung

Die vorliegende Erfindung betrifft ein Verfahren zur Herstellung von isometrischen magnetischen Eisenoxiden durch Fällung von Eisen(II)salz-haltigen wäßrigen Lösungen mit alkalischen Fällmitteln und anschließender Oxidation bei Temperaturen von 20°C bis 100°C.

Die ersten magnetischen Aufzeichnungsverfahren verwendeten Magnetonträger, in denen isometrisches Carbonyleisenpulver bzw. $\gamma$-$Fe_2O_3$-Pigment enthalten waren. Seit längerer Zeit sind die isometrischen Pigmente durch nadelförmige weitgehend aus dem Bereich magnetischer Medien verdrängt worden. Nadelförmige Pigmente weisen aufgrund ihrer Formanisotropie höhere Koerzitivkräfte als isometrische auf und zeigen im allgemeinen eine hohe Remanenz, wenn sie in Aufzeichnungsrichtung bei der Bandherstellung ausgerichtet werden. Lange Zeit ist daher fast ausschließlich Verfahren nachgegangen worden, die es gestatten, Pigmente mit kontrollierter Nadelform herzustellen.

In neuerer Zeit erst werden die Vorteile isotroper Aufzeichnungsmedien wieder berücksichtigt (EPA 0 044 258, EP-A 0 043 882), nachdem derartige Medien bereits 1955 vorgeschlagen worden sind, (US-PS 2 941 901). Isometrische magnetische Teilchen verhalten sich isotrop und sind deshalb sehr geeignet für die Herstellung von isotropen magnetischen Aufzeichnungsmedien, wie sie z.B. in der Datenaufzeichnung benötigt werden.

Weitere Einsatzgebiete für isometrische magnetische Oxide sind die magnetischen Einkomponententoner, wie sie in modernen elektrostatischen Photokopiersystemen benutzt werden, und die magnetischen Druckfarben für die Verwendung in Magnetdruckern oder die Kennzeichnung von Banknoten.

Isometrische Magnetpigmente erfordern wie alle Pigmente für magnetische Aufzeichnungsverfahren ein Herstellungsverfahren, das technisch einfach durchführbar ist und das es erlaubt, die Produkteigenschaften genau zu kontrollieren.

Es sind bereits Verfahren zur Herstellung von isometrischen magnetischen Eisenoxidpigmenten bekannt. So wird in der DE-PS 891 625 die Oxidation alkalischer Fällungen von Eisen(II)salzen mit Nitrat unter Druck vorgeschlagen. Die Anwendung von Druck macht dieses Verfahren teuer und umständlich. In der DE-AS 1 112 725 wird die alkalische Fällung von Eisen(III)salzen vorgeschlagen. Zur Erzielung magnetischer Oxide ist dabei jedoch eine hydrothermaleBehandlung der Oxide nötig und eine anschließende Reduktion mit Wasserstoff bei erhöhter Temperatur. Weiter wird in der DE-PS 944 427 die Fällung von Fe-Oxalaten vorgeschlagen, die anschließend thermisch zersetzt werden müssen. Dieses Verfahren ist aus mehreren Gründen problematisch. So neigen die Oxalate sehr zum Stauben und sind nur schwer in den für die Zersetzung nötigen Apparaten zu handhaben.

Aus der DE-OS 2 612 798 ist ein Verfahren zur Herstellung isometrischer Eisenoxide durch Fällung von Eisen(II)salzen mit alkalischen Fällmitteln und Oxidation bekannt. Nach diesem Verfahren sind jedoch lediglich grobteilige Magnetite zugänglich. Feinteilige isometrische Magnetite sind gemäß der DE-OS 2 617 569 erhältlich aus der Stöchiometrie des Magnetits entsprechenden Mischungen von Eisen(II)- und Eisen-(III)salzen und anschließender alkalischer Fällung. Dieses Verfahren erfordert den Einsatz teurer Eisen(III)-salze, die im Fall des $FeCl_3$ darüber hinaus korrosiv sind. Die so erhaltenen Pigmente sind superparamagnetisch und für magnetische Aufzeichnungszwecke ungeeignet.

Aus der DE-A 2 508 155 ist ein Zwei-Stufen-Verfahren zur Herstellung von $Fe_3O_4$-Pigmenten bekannt, bei dem in einem ersten Schritt eine $\alpha$-FeOOH-Suspension erzeugt wird und in einem zweiten Schritt bei erhöhter Temperatur und erneuter Ausfällung das $Fe_3O_4$-Pigment gebildet wird. Die Steuerung des Verfahrens ist aufwendig, so muß z.B. Überschuß von Fe(II) von 0,2 bis 1 g/l durch Zugabe oder Entfernen von Eisensulfat nach der ersten Stufe eingestellt werden. Eine Steuerung der Teilchengröße wird durch Zugabe von $\gamma$-FeOOH bewirkt, dessen Herstellung bekanntermaßen schwierig ist.

Die Aufgabe der vorliegenden Erfindung ist es somit, ein preiswürdiges technisch einfaches Verfahren zur Herstellung isometrischer magnetischer Eisenoxidpigmente mit einer definierten Teilchengröße und großer spezifischer Oberfläche zur Verfügung zu stellen.

Es wurde nun gefunden, daß dies erreicht wird durch Einstellung eines definierten Eisen(III)-Gehaltes vor der Fällung beim Verfahren der Oxidation von Eisen(II)salzen.

Gegenstand der vorliegenden Erfindung ist somit ein Verfahren zur Herstellung von isometrischen magnetischen Eisenoxiden durch Fällung von Eisen(II)salzhaltigen wäßrigen Lösungen mit alkalischen Fällmitteln und anschließender Oxidation bei Temperaturen von 20 bis 100°C, wobei vor der Zugabe des alkalischen Fällmittels ein Eisen(III)-Gehalt von 1 bis 25 Mol-%, bezogen auf Gesamteisen, eingestellt wird und die Oxidation bei einem pH-Wert von kleiner als 3 durchgeführt wird.

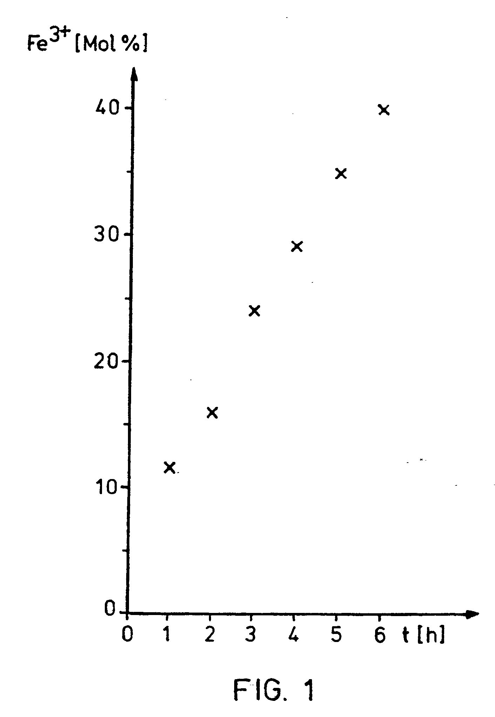

Vorteilhafterweise wird dabei die Oxidation in der wäßrigen Eisen(II)-salzlösung mit Luft durchgeführt. Zur raschen Oxidation wird dabei die Luft mit einer geeigneten Vorrichtung in der Lösung fein verteilt Geeignete Vorrichtungen sind z.B. Begasungsrührer, Blasensäulen, Strahler oder Schlaufenreaktoren. Die überraschend hohe Oxidationsgeschwindigkeit - sie steht im Gegensatz zur allgemein vertretenen Meinung über die Oxidation in sauren Eisen(II)lösungen (Gmelin 59 B, S. 805 f) - ist aus Fig. 1 zu entnehmen. Die Oxidation wird abgebrochen, wenn der nötige Eisen(III)-Gehalt für die gewünschte Feinteiligkeit des Endproduktes erzielt ist.

Ein großer Vorteil des erfindungsgemäßen Verfahrens kann darin gesehen werden, daß als Eisen(II)salz-haltige Lösungen Eisen(II)sulfate und/oder -chloride aus Stahlbeizereien und/oder Titandioxidfabriken eingesetzt werden können. Derartige Lösungen enthalten üblicherweise nur einen geringen, nicht kontrollierten Anteil an Eisen(III)salzen. Typisch ist ein Anteil von <0,5 Mol-% $Fe^{3+}$, bezogen auf Gesamteisen.

Der Zusammenhang zwischen Anfangs-Eisen(III)-Gehalt und Feinteiligkeit der Pigmente ist in den nachfolgenden Beispielen aufgezeigt. Zur Erzielung einer spezifischen Oberfläche des Endproduktes von 5 bis 50 m²/g ist ein Eisen(III)-Anteil von 1 bis 25 Mol-%, bezogen auf Gesamteisen, nötig.

Dabei ist die Teilchengröße durch die spezifische Oberfläche (BET-Verfahren mit Stickstoff) definiert, die bei Teilchen, die nach dem erfindungsgemäßen Verfahren hergestellt werden, zwischen 5 und 50 m²/g beträgt. Eine weitere Methode zur Bestimmung der Größe der Pigmente ist die röntgenographische Ermittlung der Kristallitgröße, die etwa dem Teilchendurchmesser entspricht. Teilchendurchmesser d und spezifische Oberfläche O hängen theoretisch nach folgender Formel (1) zusammen:

$$(1) \qquad O = \frac{60\ 000}{\wp \cdot d}$$

In (1) wird O in m²/g, d in Å und die Dichte des Pigmentes in g/cm³ angegeben. Für Magnetite wird eine scheinbare Dichte von 4,8 angenommen, so daß sich vereinfacht die Formel (2) ergibt:

$$(2) \qquad O = \frac{12\ 500}{d}$$

Vor oder nach der Oxidation können weitere Salze zugefügt werden, die z.B. Co, Mn, Zn, Al und/oder Phosphationen enthalten. Im Anschluß an die Einstellung des Anfangs-$Fe^{3+}$-Gehaltes wird mit einem alkalischen Fällmittel gefällt. Als Fällmittel werden bevorzugt NaOH, $Na_2CO_3$, $NH_3$, MgO und/oder $MgCO_3$ eingesetzt, der Ausfällgrad sollte zwischen 0,9 bis 2,0, bevorzugt zwischen 1,0 und 1,2, liegen.

Bei stöchiometrischem Zusatz ist der Ausfällgrad 1. Ein Unter- bzw. Überschuß von Fällmittel, bezogen auf Fe-Salz, entspricht einer prozentual gleichen Erniedrigung bzw. Erhöhung des Ausfällgrades. Im bevorzugten Bereich ist das Verfahren am wirtschaftlichsten, und gegebenenfalls zugesetzte Ionen werden besonders gut in das entstehende Eisenoxid eingebaut. Nach der Fällung findet eine Oxidation mit Luft statt, wobei bis zur vollständigen Überführung des gefällten Hydroxides in kristallines Eisenoxid oxidiert wird.

Die erfindungsgemäß hergestellten magnetischen Eisenoxide erfüllen die geforderte Eigenschaft der Feinteiligkeit im geforderten Bereich von 5 bis 50 m²/g spezifische Oberfläche. Eine Erhöhung der Koerzitivkraft geschieht vorzugsweise durch Zusatz von 0,5 bis 15 Mol-% Cobalt als Co-Salz vor der Fällung. Die magnetischen Eigenschaften der Pigmente nach dem erfindungsgemäßen Verfahren können verbessert werden, indem nach der Fällung und Oxidation das Pigment nicht nur gewaschen und getrocknet, sondern einer thermischen Behandlung unterworfen wird.

Die thermische Behandlung geschieht üblicherweise in drehbaren beheizten Birnen oder Rohren. Sie kann auf verschiedene Arten vollzogen werden. Als vorteilhaft hat sich eine Temperatur in nicht oxidierender Atmosphäre bei 200 bis 600°C, vorteilhaft 300 bis 450°C, erwiesen. Im Anschluß an diese Temperung oder anstatt der Temperung ist auch eine Oxidation unter Luft bei 100 bis 600°C, vorteilhaft 300 bis 450°C, möglich. Durch diese Maßnahme ist z.B. isometrisches $\gamma$-$Fe_2O_3$ zugänglich. Zur Erhöhung der magnetischen Remanenz ist es vorteilhaft, das Pigment einer Temperung in reduzierender Atmosphäre, vorzugsweise feuchtem Wasserstoff, bei 200 bis 600°C, bevorzugt 300 bis 450°C, zu tempern und gegebenenfalls bei Temperaturen von 100 bis 600°C, bevorzugt 300 bis 450°C, zu reoxidieren. Auf diese Weise sind isometrische magnetische Eisenoxidpigmente mit beliebigem Oxidationsgrad zugänglich.

Die erfindungsgemäß hergestellten Pigmente sind besonders für die Herstellung von Tonern, Druckfarben und magnetischen Aufzeichnungsmedien geeignet.

Die nachfolgenden Beispiele sollen die Erfindung erläutern, ohne sie dadurch einzuschränken.

Die Messung der Magnetdaten erfolgte in einem maximalen Feld von 280 kA/m. Die Pulverproben befanden sich in Röhrchen der Länge 4 cm und des Durchmessers 7 mm.

Beispiel 1

In einem 30-l-Behälter, der mit einem Begasungsrührer ausgestattet ist wird eine wäßrige Lösung von 21,7 Mol $FeSO_4$ in 22 l Lösung hergestellt. Der pH-Wert ist 2,1. Vor Beginn der Oxidation wird ein $Fe^{3+}$-Gehalt von 0,45 Mol-% titrimetrisch bestimmt. Die Lösung wird auf 70°C erwärmt und Luft über den Begasungsrührer eingebracht. Die folgende Tabelle zeigt, wie der $Fe^{3+}$-Gehalt mit fortschreitender Reaktionszeit ansteigt. Zur Verdeutlichung ist dieser Zusammenhang in graphischer Form in Abb. 1 dargestellt.

| Zeit /h/ | $Fe^{3+}$ /Mol-%/ |
|---|---|
| vor Beginn | 0,45 |
| nach Erwärmen unter Luft (1/2 h) | 4,0 |
| 1 | 11,8 |
| 2 | 18,0 |
| 3 | 24,0 |
| 4 | 29,2 |
| 5 | 35,4 |
| 6 | 40,7 |

Beispiel 2

In einem Behälter, wie in Beispiel 1 beschrieben, werden 22 l einer wäßrigen Lösung, die 21,7 Mol $FeSO_4$ enthält, bei pH = 1,9 bei 70°C mit Luft auf einen $Fe^{3+}$-Gehalt von 8,1 Mol-% gebracht. Anschließend wird mit Natronlauge gefällt (Ausfällgrad 1,03) und mit Luft oxidiert. Das Produkt wird gewaschen und bei 40°C getrocknet.

| Koerzitivkraft | 43,3 kA/m |
|---|---|
| Remanenz | 41,8 $nTm^3/g$ |
| Kristallitgröße | 38 nm |
| spezifische Oberfläche | 28 $m^2/g$ |

Beispiel 3

In einem Behälter, wie in Beispiel 1 beschrieben, werden 22 l einer wäßrigen Lösung, die 21,7 Mol $FeSO_4$ enthält, mit 250 ml 25 %iger Schwefelsäure angesäuert und bei 70°C mit Luft auf einen $Fe^{3+}$-Gehalt von 9,3 Mol-% oxidiert. Anschließend wird mit Natronlauge gefällt (Ausfällgrad 1,03) und mit Luft oxidiert. Das Produkt wird gewaschen und getrocknet.

4

| Koerzitivkraft | 13,85 kA/m |
| Remanenz | 19,5 $nTm^2/g$ |
| Kristallitgröße | 29,5 nm |
| spezifische Oberfläche | 30 $m^2/g$ |

Beispiel 4

In einem Behälter, wie in Beispiel 1 beschrieben, werden 22 l einer wäßrigen Lösung, die 21,7 Mol $FeSO_4$ enthält, auf 70°C erwärmt und mit Luft auf einen $Fe^{3+}$-Gehalt von 1,0 Mol-% eingestellt. Anschließend wird mit Natronlauge gefällt (Ausfällgrad 1,0) und mit Luft oxidiert. Das Pigment wird gewaschen und getrocknet.

| Koerzitivkraft | 9,63 kA/m |
| Remanenz | 10,2 $nTm^3/g$ |
| Kristallitgröße | 92 nm |
| spezifische Oberfläche | 9,5 $m^2/g$ |

Beispiel 5

Das Pigment nach Beispiel 2 wird bei 400°C 3 Stunden unter Luft getempert. Die Temperung findet in einer Labordrehbirne statt.

| Koerzitivkraft | 84,2 kA/m |
| Remanenz | 45,4 $nTm^2/g$ |

Beispiel 6

Das Pigment nach Beispiel 5 wird in einer Labordrehbirne 30 Minuten bei 500°C getempert und dann bei 400°C 100 Minuten mit feuchtem Wasserstoff reduziert und anschließend mit Luft bei 400°C 3 Stunden lang reoxidiert.

| Koerzitivkraft | 70,9 kA/m |
| Remanenz | 65,4 $nTm^2/g$ |

Vergleichsbeispiel

In einem Behälter, wie in Beispiel 1 beschrieben, werden 20 l einer wäßrigen Lösung von 15 Mol $Fe_2(SO_4)_3$ und 7,7 Mol $FeSO_4$ hergestellt. Es wird nur mit Natronlauge gefällt. Das Produkt wird gewaschen und getrocknet.

| Koerzitivkraft | 0 kA/m |
| Remanenz | 0 nTcm$^3$/g |
| Kristallitgröße | 11 nm |
| spezifische Oberfläche | 110 m²/g |

Das Produkt ist superparamagnetisch. Es ist für Aufzeichnungszwecke wegen der fehlenden Remanenz ungeeignet.

**Ansprüche**

1. Verfahren zur Herstellung von isometrischen magnetischen Eisenoxiden durch Fällung von Eisen(II)-salzhaltigen wäßrigen Lösungen mit alkalischen Fällmitteln und anschließender Oxidation bei Temperaturen von 20°C bis 100°C, dadurch gekennzeichnet, daß vor der Zugabe des alkalischen Fällmittels ein Eisen(III)-Gehalt von 1 bis 25 Mol-%, bezogen auf Gesamteisen, eingestellt und die Oxidation bei einem pH-Wert von kleiner als 3 durchgeführt wird.

2. Verfahren gemäß Anspruch 1, dadurch gekennzeichnet, daß die Oxidation mit Luft durchgeführt wird.

3. Verfahren gemäß einem der Ansprüche 1 oder 2, dadurch gekennzeichnet, daß als Eisen(II)salz-haltige Lösungen Eisen(II)sulfate und/oder -chloride aus Stahlbeizereien und/oder Titandioxidfabriken eingesetzt werden.

4. Verfahren gemäß einem der Ansprüche 1 bis 3, dadurch gekennzeichnet, daß als alkalisches Fällmittel NaOH, Na$_2$CO$_3$, NH$_3$, MgO und/oder MgCO$_3$ eingesetzt wird und der Ausfällgrad zwischen 0,9 und 2,0, bevorzugt zwischen 1,0 und 1,2, liegt.

5. Verfahren gemäß einem der Ansprüche 1 bis 4, dadurch gekennzeichnet, daß ein Co-Salz in Mengen von 0,5 bis 15 Mol-%, bezogen auf Eisen, vor der Fällung zugesetzt wird.

6. Verfahren gemäß einem der Ansprüche 1 bis 5, dadurch gekennzeichnet, daß nach Beendigung der Fällung das gewaschene und getrocknete Produkt bei 200 bis 600°C, bevorzugt 300 bis 450°C, in nicht oxidierender Atmosphäre getempert wird.

7. Verfahren gemäß einem der Ansprüche 1 bis 6, dadurch gekennzeichnet, daß das Eisenoxid bei 100 bis 600°C, bevorzugt 300 bis 450°C, mit Luft oxidiert wird.

8. Verfahren gemäß einem der Ansprüche 1 bis 7, dadurch gekennzeichnet, daß das Eisenoxid mit einem Reduktionsmittel, bevorzugt feuchter Wasserstoff, bei 250 bis 600°C, bevorzugt 300 bis 450°C, getempert und gegebenenfalls bei 200 bis 600°C mit Luft oxidiert wird.

**Claims**

1. Process for manufacturing isometric magnetic iron oxides by the precipitation of iron (II) salts in aqueous solutions with alkaline precipitating agents and subsequent oxidation at temperatures of 20°C to 100°C, characterised in that before the addition of the alkaline precipitating agent an iron (III) content of 1 to 25 % mol, relative to the total iron, is set and oxidation is carried out at a pH-value of less than 3.

2. Process according to claim 1, characterised in that oxidation is carried out with air.

3. Process according to one of claims 1 or 2, characterised in that as solutions containing iron (II) salts, iron (II) sulphate and/or chloride from steel pickling plants and/or titanium dioxide factories are used.

## EP 0 188 765 B1

4. Process according to one of claims 1 to 3, characterised in that as a precipitating agent, NaOH, $Na_2CO_3$, $NH_3$, MgO and/or $MgCO_3$ are used, and the ratio of precipitation is preferably between 1.0 and 1.2.

5. Process according to one of claims 1 to 4, characterised in that a Co salt is added in quantities of 0.5 to 15 % mol, relative to iron, before precipitation.

6. Process according to one of claims 1 to 5, characterised in that after precipitation has been completed, the washed and dried product is tempered at 200 to 600° C, preferably 300 to 450° C, in a non-oxidising atmosphere.

7. Process according to one of claims 1 to 6, characterised in that the iron oxide is oxidised with air at 100 to 600° C, preferably 300 to 450° C.

8. Process according to one of claims 1 to 7, characterised in that the iron oxide is tempered with a reducing agent, preferably damp hydrogen, at 250 to 600° C, preferably 300 to 450° C, and optionally oxidised with air at 200 to 600° C.

**Revendications**

1. Procédé de production d'oxydes de fer magnétiques isométriques par précipitation de solutions aqueuses contenant des sels de fer (II) avec des agents précipitants alcalins, suivie d'une oxydation à des températures de 20 à 100° C, caractérisé en ce qu'on ajuste avant l'addition de l'agent précipitant alcalin une teneur en fer (III) de 1 à 25 moles % par rapport au fer total et on conduit l'oxydation à un pH dont la valeur est inférieure à 3.

2. Procédé suivant la revendication 1, caractérisé en ce qu'on conduit l'oxydation avec de l'air.

3. Procédé suivant l'une des revendications 1 et 2, caractérisé en ce qu'on utilise comme solutions contenant des sels de fer (II), des sulfates et/ou des chlorures de fer (II) provenant d'ateliers de décapage de l'acier et/ou de fabriques de dioxyde de titane.

4. Procédé suivant l'une des revendications 1 à 3, caractérisé en ce qu'on utilise comme agent précipitant alcalin NaOH, $Na_2CO_3$, $NH_3$, MgO et/ou $MgCO_3$ et le degré de précipitation se situe entre 0,9 et 2,0, de préférence entre 1,0 et 1,2.

5. Procédé suivant l'une des revendications 1 à 4, caractérisé en ce qu'on ajoute un sel de cobalt en quantités de 0,5 à 15 moles %, par rapport au fer, avant la précipitation.

6. Procédé suivant l'une des revendications 1 à 5, caractérisé en ce que, lorsque la précipitation est terminée, le produit lavé et séché est étuvé à une température de 200 à 600° C, de préférence de 300 à 450° C dans une atmosphère non oxydante.

7. Procédé suivant l'une des revendications 1 à 6, caractérisé en ce que l'oxyde de fer est oxydé dans l'air à 100-600° C, de préférence à 300-450° C.

8. Procédé suivant l'une des revendications 1 à 7, caractérisé en ce que l'oxyde de fer est étuvé avec un agent réducteur, de préférence l'hydrogène humide, à 250-600° C, de préférence à 300-450° C et oxydé le cas échéant à 200-600° C dans l'air.

FIG. 1